# EUROPEAN PATENT APPLICATION

(11) **EP 2 163 806 A1**
(43) Date of publication of application: **17.03.2010**
(21) Application number: 09170221.7
(22) Date of filing: 14.09.2009
(51) Int. Cl.: F17C 1/06

(54) **Insulating wall for a construction, such as containers and pipes, for containing a cryogenic fluid**

(30) Priority: 15.09.2008 NL 2001984
(71) Applicant: Slebos, Henk, 1834 ED Sint Pancras (NL); Armose, Kurt, 7490 Aulum (DK)
(72) Inventor: Slebos, Henk, 1834 ED Sint Pancras (NL); Armose, Kurt, 7490 Aulum (DK)
(74) Representative: Riemens, Roelof Harm

(57) **Abstract**

Insulating wall for a construction, such as containers and pipes (1), for containing a cryogenic fluid, at least comprising a gas tight inner layer (2) with an inner surface (5) intended to come into contact with the cryogenic fluid, said gastight inner layer (2) comprising carbon fibers, and a substantial portion of the inner surface (5) of the inner layer (2) comprises carbon fibers which are in direct contact with the surroundings In adition an insulating layer (4) and a gastight outer layer (3) may be present

## Description

The present invention relates to an insulating wall for a construction such as containers and pipes for containing a cryogenic fluid, at least comprising a gas tight inner layer with an inner surface intended to come into contact with the cryogenic fluid, said gastight inner layer comprising carbon fibers

Such an insulating wall is for example known from GB-A-1 4 44310 and US-A-0 169 704. The containers disclosed therein are intended for containing a cryogenic fluid. The carbon fibers provide the construction with a high strength and low weight, though the insulating value in practice appears to be moderate..

In the prior art stainless steel is frequently used as the material for containers and pipes, which on the outside is provided with an insulating material Stainless steel is heavy and has to be cooled by the cryogenic material before it can perform its insulating effect This cooling consumes a huge amount of cooling energy Further the insulating capacity of such insulated steel constructions is also moderate

Therefore in the prior art a need exists for improving the insulating capacity of constructions for containing a cryogenic fluid without making these constructions more voluminous and/or heavier. The present invention meets the above need and thereto provides an insulating wall for a construction, such as containers and pipes, for containing a cryogenic fluid at least comprising a gas tight inner layer with an inner surface intended to come into contact with the cryogenic fluid, said gastight inner layer comprising carbon fibers, said insulating wall being **characterized in that** a substantial portion of the inner surface of the inner layer comprises carbon fibers which are in direct contact with the surroundings.

In other words, in a substantial portion of the inner surface the carbon fibers are exposed Tests have shown that carbon fibers are badly wetted by cryogenic fluids, which provides a substantial insulating effect as a consequence of the low heat transfer thereby This per se is a surprising result as usually materials having a relatively high electric conductivity also have a high thermal conductivity

Preferably of the surface area of the inner surface at least 50%, preferably at least 75%, more preferably 80% and even more preferred 90 % and most preferable substantially 100% is formed by carbon fibers which are in direct contact with the surroundings

In the present application cryogenic means being at a temperature of -60 °C or lower The most common cryogenic materials are liquid nitrogen, liquid helium, liquid air, liquid oxygen and liquid argon

Cryogenic liquids are used for various purposes These range from cooling food to freezing medical components such as tissues, organs, blood, sperm, ovules etc. Also the chemical industry makes frequent use of cryogenic materials for chemical processes

The carbon fibers in the inner layer are not particularly limited in shape, dimensions and arrangement thereof. Preferably at least in the vicinity of the inner surface of the inner layer the carbon fibers are present in an arrangement selected from: woven, non-woven, knitted, knotted, random laid, or spun woven. These fibers can be in a single filament form or in thread or strand form, or can be manufactured in the form of cloth or fabric or the like These are all commonly used forms of carbon fiber structures which are easy to handle and process Also many types of methods are known to use carbon fibers in the various embodiments thereof in the manufacture of shaped articles suitable for use with the present invention.

The construction according to the present invention for containing a cryogenic fluid is not limited to certain containers and pipes It also comprises ducts, channels, gutters, tanks with arbitrary shape and other hollow containers suitable for containing or transporting cryogenic fluids

With the containing of cryogenic fluid also temporary containing is meant; so apart from containers the invention is also suitable for transport pipes as well as cups and spoons for spooning cryogenic fluid and the like

The material of the inner layer is a material suitable for contact with cryogenic fluid In principle every material suitable for that purpose can be used in the insulating wall according to the invention as long as it is gastight and a substantial portion of the inner surface of the inner layer comprises carbon fibers which are in direct contact with the surroundings Preferably however the inner layer is manufactured from carbon fiber composite material. Such composite materials comprise carbon fibers in a suitable plastic material such as epoxy resin or polyurethane resin or the like

In a particular embodiment of the invention the inner layer at the outside comprises an insulating layer For the insulating layer all materials known for that purpose can be used, such as felt, glass wool, rock wool, and other porous fiber materials, foam materials, honeycomb structures etc

In another particular embodiment of the invention the insulating wall at the outside comprises a gastight outer layer Said gastight outer layer prevents air present in the foam material to exchange with the surroundings and further forms an additional safety measure with accidental leakage of the inner layer when damaged or the like

Preferably a substantial portion of the surface of the gastight outer layer at the side facing inward comprises carbon fibers which are in direct contact with the surroundings In this manner the outer layer provides the same insulating effect as the inner layer with accidental leakage of the inner layer, when cryogenic fluid penetrates through the inner layer and the insulating layer

The insulating wall according to the invention is not limited to three layers, i.e. inner layer, insulating layer and outer layer, but can have any desired number of layers.

The present invention further provides a transport pipe for transporting a cryogenic fluid, wherein that the wall of the pipe comprises an insulating wall according to the invention.

The invention further provides a container for a cryogenic fluid, wherein that the wall of the container comprises an insulating wall according to the invention

Finally he present invention provides the use of carbon fibers which are in direct contact with the surroundings on the inner surface of an inner layer of a construction, such as a pipe or a container, for containing a cryogenic fluid, whereby the inner surface is intended to come into contact with said cryogenic fluid.

Advantageously the carbon fibers on the inner surface of the inner layer are partially embedded in the material of the inner layer For example the material of the inner layer is a carbon fiber composite material The inner layer can however also be comprised of a glass fiber composite material or other suitable material, as long as a substantial portion of the inner surface of the inner layer comprises carbon fibers which are in direct contact with the surroundings

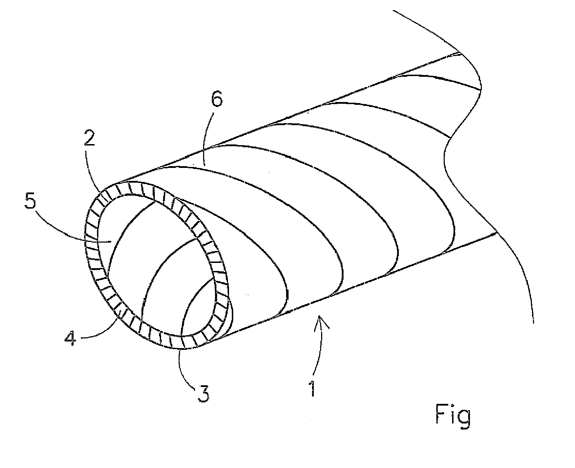

In the following the invention will be described in more detail with reference to the accompanied drawing Therein the single figure represents a transport pipe according to the invention for transporting cryogenic fluids

In the figure a pipe 1 is shown in a perspective view Said pipe 1 comprises an inner layer 2 and an outer layer 3 separated by an insulating layer 4.

The inner layer 2 is manufactured by spirally winding of a band like woven carbon fiber web 6 around a mandrel and subsequently forming a composite material with an epoxy and an additional carbon fiber web, all however in such a manner that on the inner surface 5 of the inner layer 2 virtually no epoxy is present and substantially the entire inner surface 5 is formed by carbon fibers which are in direct contact with the surroundings

Between the inner layer 2 and the outer layer 3 an insulating layer 4 is present being comprised of a paper honeycomb structure Honeycomb structures are generally known in the prior art

The outer layer 3 is comprised of the same material as the inner layer 2 This has the advantage that with accidental damaging of the inner layer 2 the cryogenic fluid cannot leak out of the pipe Furthermore a substantial portion of the inner surface of the outer layer 3 comprises just as the inner layer 2 carbon fibers which are in direct contact with the surroundings. In the case of an accidental leakage an acceptable insulating effect is retained

On the outer layer 3 the windings of the carbon fiber web 6 are clearly visible just as on the inner surface 5 of the inner layer 2.

The inner layer 2 and the outer layer 3 have a very high intrinsic strength and a relatively low weight. By the high strength of the inner layer 2 and the outer layer 3 in the insulating material, when a strong insulating material such as a paper honeycomb structure is used, a negative pressure or even vacuum can be applied This increases the insulating effect of the insulating wall according to the invention even further

## Claims

1. Insulating wall for a construction, such as containers and pipes (1), for containing a cryogenic fluid, at least comprising a gas tight inner layer (2) with an inner surface (5) intended to come into contact with the cryogenic fluid, said gastight inner layer (2) comprising carbon fibers, **characterized in that** a substantial portion of the inner surface (5) of the inner layer (2) comprises carbon fibers which are in direct contact with the surroundings.

2. Insulating wall according to claim 1, **characterized in that** the carbon fibers, at least in the vicinity of the inner surface (5) of the inner layer (2) are present in an arrangement selected from: woven, non-woven, knitted, knotted, random laid, spun woven

3. Insulating wall according to one or more of claims 1-2, **characterized in that** the inner layer (2) is manufactured from a carbon fiber composite material

4. Insulating wall according to one or more of the preceding claims, **characterized in that** the inner layer (2) comprises an insulating layer (4) on the outside

5. Insulating wall according to claim 4, **characterized in that** the insulating layer (4) comprises a gas tight outer layer (3) on the outside.

6. Insulating wall according to claim 5, **characterized in that** a substantial portion of the surface of the gastight outer layer (3) on the side facing inward comprises carbon fibers which are in direct contact with the surroundings

7. Transport pipe for a cryogenic fluid, **characterized in that** the wall of the pipe (1) comprises an insulating wall according to one or more of the preceding claims

8. Container for a cryogenic fluid, **characterized in that** the wall of the container comprises an insulating wall according to one or more of claims 1-6

9. Use of carbon fibers being in direct contact with the surroundings on the inner surface (5) of the inner layer (2) of a construction, such as a pipe (1) or a container, intended for containing a cryogenic fluid, whereby the inner surface (5) is intended to come into contact with said cryogenic fluid

10. Use according to claim 9, **characterized in that** the carbon fibers on the inner surface (5) of the inner layer (2) are partially embedded in the material of the inner layer (2).
